# EUROPEAN PATENT APPLICATION

(11) **EP 3 733 553 A1**
(43) Date of publication of application: **04.11.2020**
(21) Application number: 18893400.4
(22) Date of filing: 26.12.2018
(51) Int. Cl.: B65D 81/34, F24V 30/00, A47J 36/28

(54) **SELF-HEATABLE CONTAINER**

(30) Priority: 26.12.2017 PE 0028292017
(71) Applicant: Casimiro Rivadeneyra, Pamela Jackelin, Jauja, Junín 12601 (PE)
(72) Inventor: BARRERA RIVADENEYRA, Walter, Lima 7 (PE); CASIMIRO RIVADENEYRA, Pamela Jackelin, Junín 12601 (PE)
(74) Representative: Herrero & Asociados, S.L.
(86) International application number: PCT/PE2018/000038
(87) International publication number: WO 2019/132678

(57) **Abstract**

The present invention related to a container for food and other products, where said container comprises: An upper compartment or part and a lower threaded lid; in the upper compartment is placed the contents of the product that can be food, and others. The lower threaded lid is interchangeable and allows the reuse of the upper compartment, and the arrangement of the upper compartment in an extended manner and under the upper compartment allows easy, quick and practical interchangeability of the lower threaded lid, without needing to flip the upper compartment in order to place or remove it. Likewise, the upper threaded lid is protected by a security seal at the junction between the upper threaded contour and said upper threaded lid. The package or container has at least one flexible and adaptable handle. Between the upper compartment and the inner container there is a free space through which the heat flows and surrounds the outside of the entire inner container, which holds the content of the product. The lower threaded lid has an integral mechanism of compounds that houses the chemical compounds that allow food to be heated and remain hot; said chemical compounds are calcium oxide or calcium chloride and water, separated by a breakable sheet and/or a breakable container. The calcium oxide or calcium chloride and the breakable water container are placed separately, as well as at least one striking mechanism for breaking the water container, allowing the elements to combine, producing an exothermic reaction. The lower threaded lid is joined to the upper compartment through a threaded connection and optionally an adhesive tape that makes it possible to maintain the temperature and avoid possible leaks of the content that is inside the container. There are three optional mechanisms for activating the self-heating device.

## Description

### TECHNICAL FIELD

This invention is on the technical field of containers that hold or contain (also to package) food or other inedible products that need to be heated or cooked within the container. There is a wide range of products to which this technology may be applied.

### BACKGROUND OF THIS INVENTION

Currently there is a Spanish patent with publication number ES2581303 related to a self-heating container for pre-cooked food consisting of a container with an external receptacle that has a lower receptacle with calcium oxide, a bag of water and a striker to break the bag and mix the water with the calcium oxide thus causing an exothermic reaction; and an upper container that holds the pre-cooked food and is attached to the lower receptacle. The outer receptacle has on its side surface some lowered and protruding sectors making hollow side chambers between the lower container and such side surface and, in correlation with the upper end of the mentioned vertical sectors, it has a perimeter step for linear support of a defined protruding rim in the upper opening of the lower beaker. The upper receptacle consists of a perimeter step in an area near its upper end for its support and it is secured by means of an adhesive placed on the protruding upper edge of the lower receptacle.

However, the packaging design of this invention is somewhat uncommercial for it has the shape of a circular plate. Although it is true that it uses the mixing of two chemical elements, calcium oxide and water, to produce the exothermic reaction, its location at the bottom of the container is not safe for the user because the container material is too flexible when hot. Also, the design of the container can have small leaks of the chemical compound since both containers are only glued together with an adhesive which when subjected to heat can come off or detach. Furthermore, the size of the container is not so practical, it is a bit big and it is not adequate to be carried inside purses, lunch boxes, and others. The lid of the container is not good because it is unsafe, only for single use and not practical. The shape of the container design would not be suitable nor ideal for holding beverages such as coffee, mates, and others. The volume of the container is too large, requiring more space when they are packaged in boxes.

Currently, there is a self-heating product in Spain called "2 GO" which refers to a self-heating container for food. It has a common technique employed for pre-cooked food and comprises: a conical container, which is made up of two receptacles, one inside the other, one receptacle has a lower location and the other has an upper location; the upper receptacle holds the content of the product and the lower receptacle holds the calcium oxide and the colored water which when mixed produce the exothermic reaction. Its trigger mechanism is as follows: the lid is removed from the lower part and in the inside of this lower part a piston is located which is pressed hard until it sinks and this is what causes the chemical elements to mix and heat up the product. The upper and lower lid of the container are sliders and of a single use, this means that, once the lid is removed, it can no longer be put back in.

However, since this invention has a packaging design which has two lids, one lower and one upper, in some cases, only in the upper lid has an easy-open ring, both lids once removed cannot be replaced or be used again, which is unsafe for the contents of the product since such contents could be spilled or leaked. The same happens with the lower lid which when removed cannot be replaced, this produces a feeling of insecurity since this lower part holds all the chemical elements that heat the product.

The product activation mechanism is not practical because to activate the product, you have to turn the container, remove the lower lid and press down hard on the piston inside, until that part sinks and the product is activated and it starts to heat. All packaging systems, receptacles, containers, and others which are self-heating are only of a single use, which makes the product unaffordable and not eco-friendly.

### DESCRIPTION OF THIS INVENTION

In order to solve the aforementioned problems, this invention was developed, which consists of a reusable self-heating container focused on a social support approach for the victims of natural disasters, for children's lunch boxes, workers' lunch boxes, for staff of the Armed Forces and others.

This invention comprises:
an upper portion or compartment which has a container inside filled with the contents of the product and has a watertight connection between the upper part of the upper portion and the upper part of the inside container; there is an internal free space between the container and the upper portion for heat circulation;
a lower threaded lid coupled through a threaded tube to the upper compartment for easy interchangeability, the lower threaded lid is of continuous extension and fits in the contour of the lower part of the compartment or, also, in the upper portion. The lower threaded lid is where the self-heating of the container occurs and holds primarily calcium oxide or calcium chloride, separated from water by means of at least one breakable sheet and/or a breakable water container. It also consists of activation mechanism of rotation, of buttons or of fitting accessory, which is placed outside of the lower threaded lid and causes the breakage of the breakable sheet or the breakable water container by means of at least one striker placed inside of the lower threaded lid, thus allowing the mixing of the calcium oxide or calcium chloride compound with the water, precipitating the exothermic reaction.

This lower threaded lid with all the inner elements detailed above can be manufactured and marketed as an independent device, thus this part has been called a self-heating device.

In one preferred mode, the upper compartment or portion comprises a threaded upper contour and an upper threaded lid that fits into the upper threaded contour of the upper portion. In another preferred mode, the upper compartment comprises at least one flexible handle on the outer side of the container, which in a first state is foldable to the contour of the container and in a second state is unfolded to a position perpendicular to the contour of the container. Also, this invention may have an upper sheet, preferably of aluminum or other, placed in the upper contour or upper mouth of the upper compartment to seal it. Likewise, the activation mechanism and all the elements that when combined together heat the content of the product are installed in the lower threaded lid. The container (upper compartment or portion) has two threaded lids, an upper threaded lid and a lower threaded lid. An expanded polystyrene heat insulation layer is provided that covers the entire external surface of the container, in order to keep the heat longer and to avoid burning hands when handling the hot container.

Regarding the activation (trigger) mechanisms, three options are being proposed:
The first is a rotating activation mechanism which comprises a lower threaded lid, within such lid an integral accessory is installed that houses calcium oxide and water. Three striker accessories are placed on the base of the lower lid, and also another striker accessory is installed on the base of the inner container. When rotation of the trigger occurs, the base with the striking accessories rises up and breaks the water container, activating the device to start heating the product.

The second is a button activation mechanism which comprises a pair of simultaneous activation buttons placed on both external sides of the lower threaded lid; these buttons are connected to a base that has at least one striker inside the lower threaded lid aligned with the water container, when the buttons are pressed simultaneously the water container is broken up.

The third option is an activation mechanism with a fitting accessory which includes a striking accessory that has an elongated shape, with a threaded body and a pointed end. This accessory is adhered removable to the side of the lower threaded lid. On the external side of the lower threaded lid an internal conduit is provided that connects to the water container and once the striker accessory is inserted in such internal conduit, the water container breaks. The striker accessory is irreversible of being removed or taken out again.

The exothermic reaction is done in the lower threaded lid which includes the activation mechanisms for such reaction and, the upper and lower compartments are located one below the other as a continuous extension with a threaded tube, thus forming a solo container. This threaded tube allows easy and practical interchangeability of the lower threaded lid and the reusing of the container or of the upper portion to reheat different foods, or the like, placed inside the upper portion. In order to reuse the upper compartment, just replace the (Self-Heating Device/Lower threaded lid) with another one. Also, the feature of the scheme of the lower threaded lid as an extension of the upper compartment allows quick and easy maneuverability for the placement or removal of the (Lower threaded lid/Self-heating device) without the need of flipping the upper compartment or having to look where to fit the lower threaded lid for interchangeability. The Self-heating device is in the shape of a lower threaded lid: Calcium oxide and water are installed inside this lid which, when combined, heat the contents of the product. Another technical advantage of this invention is that the three activation mechanisms are suitable for both the "single use self-heating container systems" and the "reusable container systems".
Another technical advantage of this invention is that the upper threaded lid allows the container to be capped in an easy and safe way of putting it on and taking it off, without the need to put excessive pressure on the lid to remove it. Other lids of the state of the art include pressure mechanisms to remove the lid, which can cause internal liquid to spill. The upper threaded lid allows to recap the container easily many times. This mechanism is very effective, practical, safe and very handy.

Another technical advantage of this invention is that it counts with at least one flexible handle, which can be folded adopting the shape of the contour of the container. This avoids problems in stacking and in the packing process when transporting the containers in quantity. The flexibility of said handle allows it to be unfolded to carry or lift it with the fingers without difficulty.

Furthermore, in the state of the art there are no records on the use of the exothermic reaction activation mechanisms for self-heating containers, which allow activation to be carried out with practicality. While the security seals prevent rotations or involuntary activations of the fixing mechanisms or removal of the upper lid.

Likewise, it was verified that it is the first "Reusable Self-Heating Container System" worldwide which makes it a practical, easy to handle, safe, affordable and eco-friendly innovative packaging.

The self-heating device is very innovative since it has a very light lower threaded lid which is very practical, affordable and ecofriendly as a complement of the container of the reusable self-heating system. Inside this lower threaded lid the entire activation and heating mechanisms of the self-heating device are located; they consist of at least a couple of chemical compounds that produce an exothermic reaction; the first chemical compound or element of segment A can be calcium oxide, calcium chloride or another similar chemical which when mixed with a second fluid chemical compound or element of segment B, which can be water, produces an exothermic reaction, giving off heat (energy).

Each chemical component, calcium oxide or calcium chloride, and water are placed in a small breakable container separated by a grid and/or a breakable or chopped sheet which keeps each component isolated.

At the time of product activation, a rupture of the breakable or choppy sheet occurs, and subsequently, a second rupture of the water container happens, and that is where the chemical components combine or mix, producing the exothermic reaction and giving off heat, in such a way that the chemical elements of segment A (calcium oxide or calcium chloride) absorb element B (water), completely becoming a solid state mix.
The lower threaded lid of the container is mainly structured as follows: the elements of segments A and B are separated by an integral accessory of components which has three levels and is mainly of cylindrical shape. Element B (water) is held in a small breakable container. Inside each level are placed the chemical elements. The second and third levels have holes, thus the chemical elements and the heat given off can pass to the other level through the holes fluidly; also, through these holes the heat given off goes to the upper compartment.

The inner part of the container is lined up with a sheet to prevent any type of leakage of the chemical elements. Between both compartments and the surrounding of the container there is a small space, its size is proportional to the size of the container. This space lets the heat pass and surrounds the outer side of the internal container from the upper compartment causing the entire contents of the product to be heated evenly.

The external part of the container is covered by a sheet of insulating material in order to insulate and block the heat, ensuring that the heat transmitted to the outside is minimal, so that when the container is touched, only a minimum heat is felt around all the contour of the container, making it suitable for human touch.

There are three activation mechanisms in the self-heating device: it should be noted that the chemical formula used in the self-heating device is the same for all of them.

**1. ROTATING ACTIVATION MECHANISM** - the rotating activation mechanism works as follows: at the bottom of the container there is a lower threaded lid, the first thing to do is to remove the security seal from the lower part, after doing that, put a hand on the lower threaded lid and give it a turn, at that moment a rupture is caused that makes the chemical component, calcium oxide or calcium chloride, and water to combine, causing the water to be absorbed by the chemical elements of calcium oxide or calcium chloride-- becoming a solid state mix. It is at that moment that the exothermic reaction occurs which gives off heat in the form of steam causing the product contents to begin to heat up, warming up the container within 1 to 5 minutes.

In the lower compartment, the self-heating device is placed and within it the activation mechanism is located and it is there where the self-heating container is heated; at its base there is a central pointed accessory which has arms on both sides and each arm has a pointed accessory in the form of a squeezer, among others; likewise, a striking accessory with a downward position and direction is located at the base of the inner container, having a total of four pointed or squeezing accessories, which when it is turned around rise up and cause the sheet to break up and subsequently to crack up the breakable container where element B (water) is found, making both substances to combine and then the exothermic reaction occurs producing heat which surrounds the entire contour of the container through the free space between the two compartments. This mechanism is very effective, practical, safe and very handy. This "Rotating Activation Mechanism" is applicable to both the "Single Use Self-Heating Container System" and the "Reusable Self-Heating Container System"

In the case of the single-use self-heating container system, once the activation mechanism of the self-heating device has been placed and installed, then the self-heating rotating device of activation is installed, which has an irreversible mechanism to reopen, (it is irreversible to turn in the opposite direction). The rotating mechanism is threaded almost completely so that it requires only a small turn to activate the device, also such turn would cause more compaction and to seal completely the container thus avoiding any type of leakage, providing more safety to the container since at its bottom are concentrated all the chemical compounds and the formula of the self-heating device.

In the case of the reusable self-heating container system, once the activation mechanism of the self-heating device has been placed and installed, the self-heating device of rotating activation is placed, which has the shape of a lower threaded lid which is easy to remove. It is only needed to turn the lower lid and screw it completely, when the lid is closed fully the device is activated, also by making the final turn will cause more compaction and the complete sealing of the container thus avoiding any type of leakage, and providing more safety to the container since at its bottom are concentrated all the chemical compounds and formula of the self-heating device.

In the rotating activation mechanism, a security seal is glued on top in the horizontal space where the rotation takes place, keeping fixed one upper and one lower side of the lower threaded lid, which when removing the security seal and making a rotation this small space is completely covered and sealed; the security seal at the lower part is thick and has a very peculiar material because it fits into the gap between the upper and lower side of the lower threaded lid.

Something similar happens when placing the upper threaded lid, where the contents of the product are filled in, such as soup, coffee, etc., which is sealed with an aluminum foil or others, to protect the contents of the product; in this case the upper lid that is placed is threaded and the security seal is also attached to it. At the time of consuming the product it is only needed to remove the security seal, unscrew the upper lid, remove the aluminum foil and proceed to consume the product. The upper threaded lid is very good because it can recap the container many times.

**2. MECHANISM WITH ACTIVATION BUTTON:** there are two forms of activation with button

ACTIVATION BUTTON 1 - This mechanism works as follows: remove the security seal from the lower part of the container and press the activation buttons on both sides, which are located on the lower part of the container, both buttons have one pointed accessory, squeezer, etc. which when pressed causes the breaking of the container of element B (water), this manipulation triggers the self-heating device. What happens internally is that when pressing both buttons causes the protective sheet and the water container to break up, making the water to combine with element A (calcium oxide or calcium chloride), being the water absorbed by these chemical elements A. It is there where the exothermic reaction is produced which gives off heat in the form of steam that heats the contents of the product, in the span of 1 to 5 minutes. All elements are installed within the integral mechanism of components.

ACTIVATION BUTTON 2 - This mechanism works as follows: remove the security seal from the lower part of the container and then press up simultaneously the two trigger buttons located on both sides of the lower part of the container, both buttons have one integral pointed accessory which is the intersection and by which both trigger buttons are joined, these buttons work together when pressed either up or down. Pressing both buttons up causes the striker to rise breaking up the breakable container of element B (water), with this manipulation the self-heating device is activated. What happens internally is that pressing both buttons produces a breakup of the sheet and of the breakable container with water causing it to combine with element A (calcium oxide, calcium chloride, or others), being the water absorbed by these chemical elements A. It is there where the exothermic reaction is produced which gives off natural heat in the form of steam that heats up the contents of the product, in a period of 1 to 5 minutes. All chemical elements are installed within the integral accessory of components of the self-heating device.

Something similar happens when placing the upper threaded lid, beaker where the contents of the product is poured in, such as soup, coffee, etc. It is sealed with an aluminum foil to protect the contents of the product. In this case the upper lid that is placed there is threaded and the security seal is also attached to it, so that when consuming the contents of the product, for example, soup, it is only needed to remove the security seal, unscrew the upper lid, remove the aluminum foil and proceed to consume the product. The upper threaded lid is very good because it allows to recap the container many times. This mechanism is very effective, practical, safe and very handy.

This button activation mechanism is applicable to the two systems of self-heating containers for both the single-use and the reusable one.

In the case of the single-use self-heating container system, the lower lid is already sealed and hermetically attached to the body of the container, and therefore the lower lid can no longer be removed, taken out or pulled out because such lower lid is attached to the body of the container, for safety and to avoid leaks etc. Inside the lower lid, the "Button Activation Mechanism" and all the heating chemical elements are already installed.

In the case of the reusable self-heating container system, only the lower lid is placed and screwed on, which is easy to remove and put back on; the "Activation Mechanism with Buttons" and all the chemical elements come already installed inside the threaded lid. At its last turn, the lower threaded lid is completely closed and so, it is compacted more sealing completely the container, not allowing any type of leakage, which improves safety, since in such lower part all the chemical compounds and the self-heating device formula are located.

**3. ACTIVATION MECHANISM WITH FITTING ACCESSORY:** There are 2 forms of activation with a fitting accessory.

FITTING ACCESSORY 1 - The activation mechanism with fitting accessory 1 works as follows: the security seal is removed from the lower part and the accessory is inserted into the lower side of the container, fitting the accessory in the container with its irreversible threaded mechanism which inhibits to remove it or the accessory. This accessory has an elongated and pointed threaded shape, is made from a flexible material, and is glued on the same lower side of the container. When introducing the accessory, the device is activated causing the rupture of the sheet and the water container, thus activating the self-heating device. What happens internally is that breaking the water container, causes the water to mix with chemical element A (calcium oxide, calcium chloride) and the water is absorbed by either of these chemical elements A. As a result, the exothermic reaction is produced which gives off natural heat in the form of steam that heats the contents of the product within 1 to 5 minutes. All chemical elements are placed inside the integral accessory of the self-heating device.

FITTING ACCESSORY 2 - The activation mechanism with fitting accessory 2, works as follows: the security seal is removed from the lower part. The threaded accessory of the lower side part is rotated, fitting perfectly to the container. This accessory has a threaded fitting shape, elongated, pointed and is made of a flexible material that is irreversible for removal, taken out or detaching.

This accessory comes already placed on the lower side of the container. When turning the accessory it sinks and fits into the container, thus activating the device, causing the rupture of the sheet and of the water container, thus activating the self-heating device. What happens internally is that breaking the water container, causes the water to mix with chemical element A (calcium oxide, calcium chloride) and the water is absorbed by either of these chemical elements A. As a result, the exothermic reaction is produced which gives off natural heat in the form of steam that surrounds all the contour of the container flowing through the free space between the two compartments and heating the contents of the product within 1 to 5 minutes. All chemical elements are located inside the integral accessory of the self-heating device.

The internal receptacle of the upper compartment is sealed with an aluminum foil in order to protect the contents of the product. In this case, the security seal is placed and attached to the upper threaded lid, so that when consuming the contents of the product, for example, soup, only is needed to remove the security seal, unscrew the upper lid, remove the aluminum foil and proceed to consume the product. The upper threaded lid is very good because it allows to recap the container several times. This mechanism is very effective, practical, safe and very easy to handle. This "Fitting Activation Mechanism" is applicable to both the "Single Use Self-Heating Container System" and the "Reusable Self-Heating Container System"

In the case of the Single Use Self-heating Container System, the lower lid is already sealed and hermetically attached to the body of the container, and therefore the lower lid can no longer be removed, taken out or detached because this lower lid is attached to the body of the container for safety purposes and to avoid leaks etc. Inside the lower lid, are already placed the activation mechanism with a fitting accessory and all the heating chemical elements.

In the case of the Reusable Self-heating Container System, only the lower lid is placed and screwed on, being easy to remove and then put back on. The "activation fitting mechanism" and all the heating chemical elements are already installed inside the threaded lid. When taking the last turn, the threaded lid is completely closed and it is compacted further, sealing completely the container and avoiding any type of leaks, all for safety purposes, since at the lower part all the chemical compounds and the formula of the self-heating device are located.

The three activation mechanisms are applicable to the two Self-heating Container Systems for both the single-use system and the reusable system one.

All that has been detailed herein represents an improvement of the state of the art since, according to the experiments carried out, it was observed and determined that the natural heat given off by the exothermic reaction does not produce toxic gases nor bad odors. The period to heat up the product in the container takes from 1 to 5 minutes, determined by the tests and experiments carried out on the prototype of the self-heating container.

Said chemical compound gives off heat, which rapidly heats the contents of the container, reaching temperatures of "40°C - 60°C". The temperature rises quickly. Also, the temperature degree depends on the amount used of both substances; in other words, if the amount of calcium oxide or calcium chloride added to the chemical compound is equal to that of water, the temperature degree will be higher and can reach more than 45°C, enough to heat or cook different products like food, and others. All depends on the amount of each substance that is used in mixing the chemical compound or formula.

A very important first point to consider about the chemical compound, which gives off natural heat, is that it is not toxic nor does it produce bad odors and is very suitable for humans.

Furthermore, the chemical compound does not mix at all with the contents of the product because both are in different compartments or parts. The substances used in the mix are very good, and highly recommended by the Ministry of Health for using and handling different foods and processes such as: balancing water PH, purifying drinking water, re-mineralizing water through Calcium contribution, and are also recommended for disinfecting bacteria and germs in fruits and vegetables. This Calcium mineral has many benefits and is suitable for humans.

The self-heating container has different designs: cylindrical, conical, rectangular, square, and others; it is ergonomic, recyclable, reusable, affordable, practical, eco-friendly and does not harm the environment. When it is activated heats the contents of the product in 1 to 5 minutes, reaching temperatures of 45°C - 60°C. The self-heating container can heat different product contents such as: food, beverages, wet wipes, serums, and other products that can be heated or cooked. Thus, it becomes a portable product, since it can be carried in a purse, backpack, etc. and transported to any desired place and be activated or heated at any time.

### BRIEF DESCRIPTION OF THE FIGURES

In order to fully complete the description included herein and to facilitate the understanding of the characteristics of this invention, a set of drawings is attached to this specification, in which, by way of illustration and with no limitations, the following has been depicted.

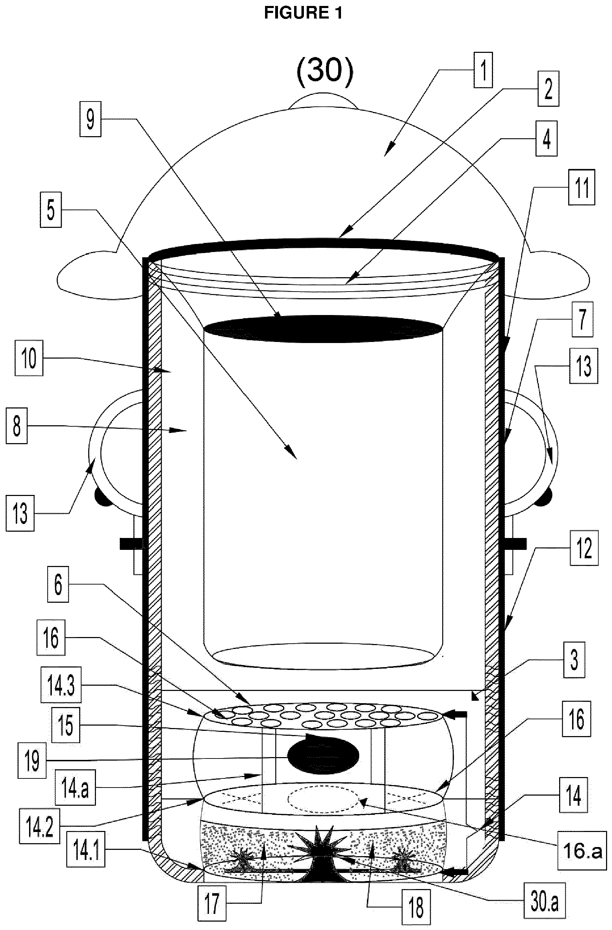

- Figure 1 shows a front view of the self-heating container, focused on the "Rotating activation mechanism (30)", where it can be observed: the cover (1), the threaded upper lid (2), the threaded upper contour (4), the upper compartment (5), the lower screw lid (3), the entire body of the container (7), the free space (8) between both compartments (5; 6), also the upper sheet (9) which is placed in the upper mouth of the container where the product content is filled. It can also be seen: the inner sheet (10) that is lined up in the inside of the container, the outer sheet (11), the insulating sheet (12) (which isolates heat), the adaptable handle (13), the integral mechanism of chemical compounds (14) (which is a 3-level mechanism (14.1; 14.2; 14.3), each level can hold a chemical element: calcium oxide (17), or calcium chloride (18), and water (19); in the first level (14.1), there is calcium oxide (17), or calcium chloride (18), and on the second level the (14.2), holds water (19), the third level (14.3), has holes on it and has free space, to let the heat flow upwards with no problems. It can also be seen, the fitting of the water container (14.a), the water container (15), the sheet (16) that covers each level (14.1; 14.2; 14.3) of the integral mechanism of compounds (14); also can be observed the breakable or choppy sheet (16.a) of the second level (14.2). This drawing represents the rotating activation mechanism (30), here it can be seen the striking accessory with two arms (30.a), which when it is rotated rises up and produces the rupture of the water container (15), causing that both chemical elements calcium oxide (17) or calcium chloride (18) mix with water (19), producing the exothermic reaction.

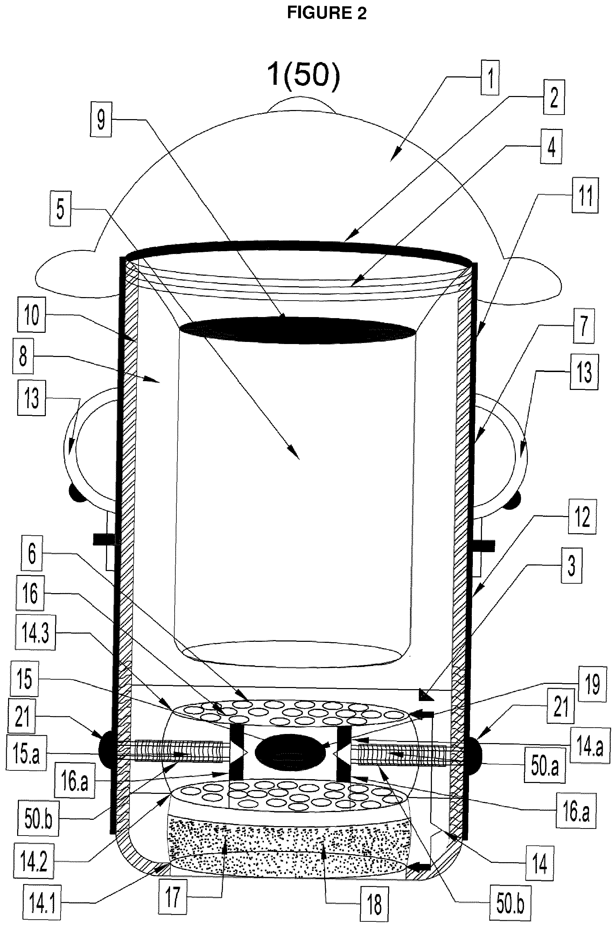

- Figure 2 shows a front view of the self-heating container, focused on the "Activation mechanism with buttons 1 (50)", where it can be seen the cover (1), the threaded upper lid (2), the upper threaded contour (4), the upper compartment (5), the lower threaded lid (3), the entire body of the container (7), the free space (8) between both compartments (5;6), also the upper sheet (9) that is placed in the upper mouth of the container where the product content is filled. It can also be seen the inner sheet (10) that is lined up in the inside of the container, the outer sheet (11), the insulating sheet (12) (which isolates heat), the adaptable handles (13), the integral mechanism of chemical compounds (14) (which is a 3-level mechanism (14.1; 14.2; 14.3), each level holding a chemical element that can be, calcium oxide (17), or calcium chloride (18), and water (19); the first level (14.1), holds calcium oxide (17), or calcium chloride (18), and the second level (14.2), holds water (19), the third level (14.3), has holes and has free space, so that heat flows upwards with no problems. It can also be seen, the fitting of the water container (14.a), the water container (15), the sheet (16) that covers each level (14.1; 14.2; 14.3) of the integral mechanism of chemical compounds (14), the breakable or chopped sheet (16.a) which protects the side parts of the water fitting (14.a). Likewise, the protective sheet (21) which protects the initial part of the striker accessory when pressing the side buttons (50.a); also it can be seen the fittings of the side strikers (50.b). This drawing shows the Activation Mechanism with Buttons 1 (50), here it can be seen the striker accessories with side buttons (50.a), and the accessories where the side strikers (50.b) fit. Pressing the side buttons (50.a) produces the rupture of the water container (15), making both calcium oxide (17) or calcium chloride (18) mix with water (19), causing the exothermic reaction.

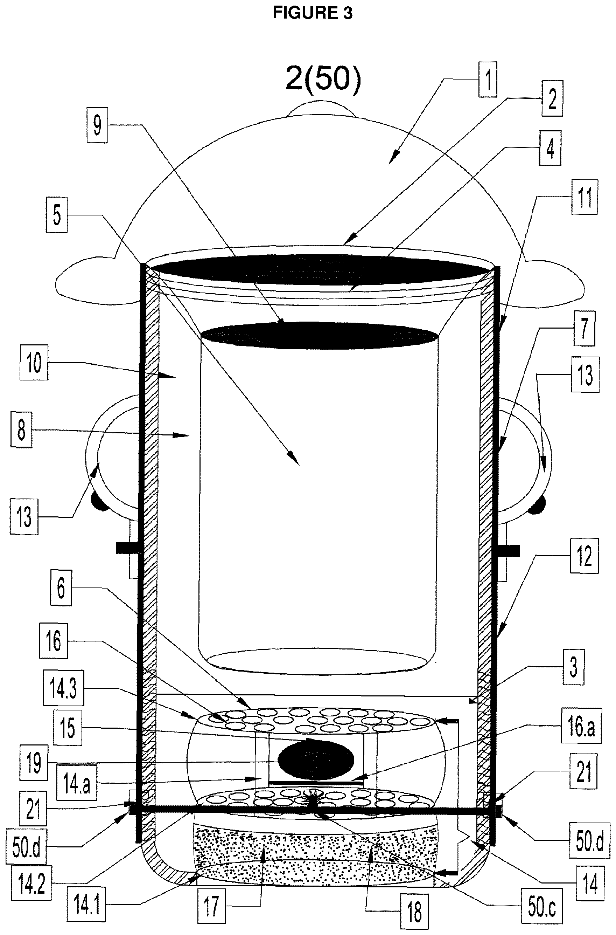

- Figure 3 shows a front view of the self-heating container, focused on the "Activation mechanism with buttons 2 (50)", where it can be seen the cover (1), the threaded upper lid (2), the upper threaded contour (4), the upper compartment (5), the lower threaded lid (3), the entire body of the container (7), the free space (8) between both compartments (5; 6), also the upper sheet (9) that is placed in the upper mouth of the container where the product content is filled. It can also be seen the inner sheet (10) that is lined up inside of the container, the outer sheet (11), the insulating sheet (12) (which isolates heat), the adaptable handles (13), the integral mechanism of chemical compounds (14) (which is a 3-level mechanism (14.1; 14.2; 14.3), each level holding a chemical element that can be, calcium oxide (17), or calcium chloride (18), and water (19); the first level (14.1), holds calcium oxide (17), or calcium chloride (18), and the second level (14.2), holds water (19), the third level (14.3), has holes and has free space, so that heat flows upwards with no problems. It can also be seen the fitting of the water container (14.a), the water container (15), the sheet (16) that covers each level (14.1; 14.2; 14.3) of the integral mechanism of chemical compounds (14), the breakable or chopped sheet (16.a) which protects the side parts of the water fitting (14.a). Likewise, the protective sheet (21) which protects the interior part of the buttons (50.d). The 2 buttons (50.d) are pressed at the same time, since both buttons (50.d) have an up and down mechanism and both buttons (50.d) work together. This drawing represents the activation mechanism with buttons 2 (50), it can be seen the striker accessory with the buttons coupled together (50.c). The striking accessory (50.c) links both side buttons (50.d) in the same axis; when the 2 buttons (50.d) are pressed upwards simultaneously, the rupture of the water container (15) occurs, making both elements, calcium oxide (17) and calcium chloride (18), to mix with water (19), causing the exothermic reaction.

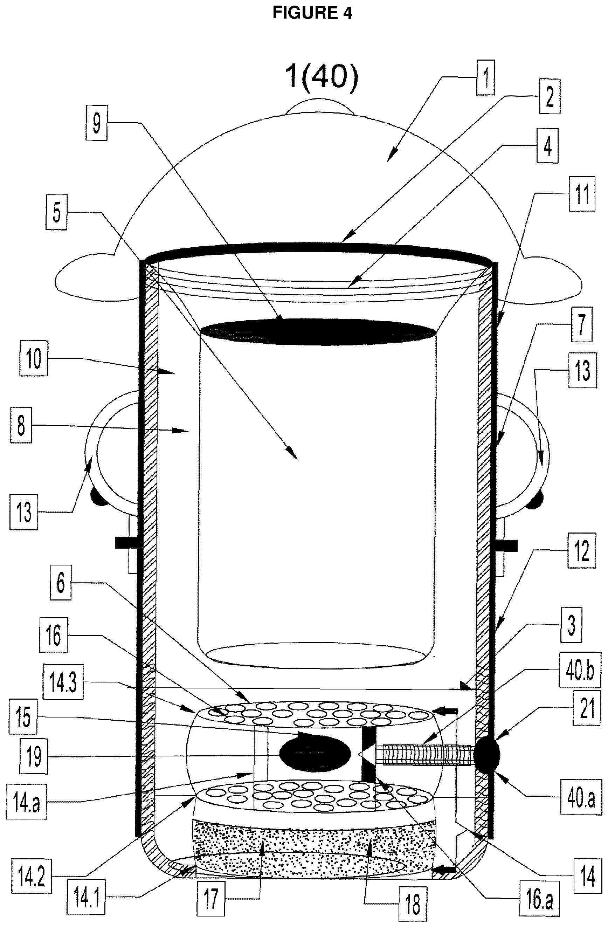

- Figure 4 shows a front view of the self-heating container, focused on the "Activation mechanism with fitting accessories 1 (40)", where it is shown: the cover (1), the threaded upper lid (2), the upper threaded contour (4), the upper compartment (5), the lower threaded lid (3), the entire body of the container (7), the free space (8) between both compartments (5; 6), also the upper sheet (9) that is placed in the upper mouth of the container where the product content is filled. It is also shown the inner sheet (10) that is lined up in the inside of the container, the outer sheet (11), the insulating sheet (12) (which isolates heat), the adaptable handles (13), the integral mechanism of chemical compounds (14) (which is a 3-level mechanism (14.1; 14.2; 14.3), each level holding a chemical element that can be, calcium oxide (17), or calcium chloride (18), and water (19); the first level (14.1) holds calcium oxide (17) or calcium chloride (18), and the second level (14.2), holds water (19), the third level (14.3), has holes and has free space, so that heat flows upwards with no problems. It is also shown the fitting of the water container (14.a), the water container (15), the sheet (16) that covers each level (14.1; 14.2; 14.3) of the integral mechanism of chemical compounds (14), the breakable or chopped sheet (16.a) which protects the side parts of the water fitting (14.a). Likewise, it is shown the protective sheet (21) which protects the part through which the striker accessory (40.a) is inserted. This drawing represents the activation mechanism with fitting accessory 1 (40); here it is shown the inserted striker accessory (40.a), and the fitting accessory (40.b). When introducing the striker accessory (40.a), the rupture of the water container (15) occurs, causing that both elements, calcium oxide (17) and calcium chloride (18), mix with water (19), producing the exothermic reaction.

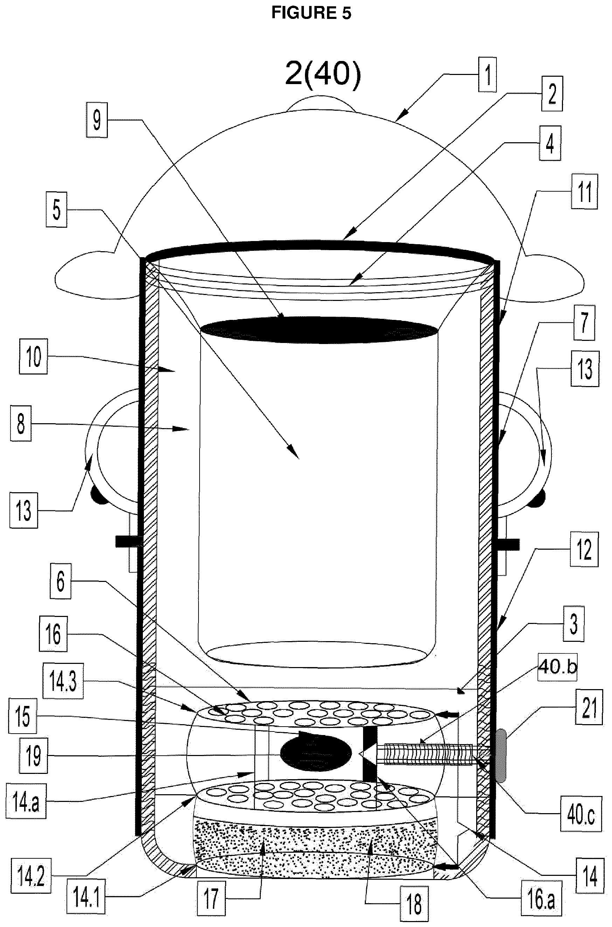

- Figure 5 shows a front view of the self-heating container, focused on the "Activation mechanism with fitting accessory 2 (40)", where it is shown: the cover (1), the threaded upper lid (2), the upper threaded contour (4), the upper compartment (5), the lower threaded lid (3), the entire body of the container (7), the free space (8) between both compartments (5;6), also the upper sheet (9) that is placed in the upper mouth of the container where the product content is filled. It is also shown the inner sheet (10) that is lined up in the inside of the container, the outer sheet (11), the insulating sheet (12) (which isolates heat), the adaptable handles (13), the integral mechanism of chemical compounds (14) which is a 3-level mechanism (14.1; 14.2; 14.3), each level holding a chemical element that can be, calcium oxide (17), or calcium chloride (18), and water (19); the first level (14.1) holds calcium oxide (17) or calcium chloride (18), and the second level (14.2), holds water (19), the third level (14.3), has holes and has free space, so that heat flows upwards with no problems; it is also shown the fitting of the water container (14.a), the water container (15), the breakable or chopped sheet (16) that covers each level (14.1; 14.2; 14.3) of the integral mechanism of chemical compounds (14), the breakable or chopped sheet (16.a) which protects the side parts of the water fitting (14.a). Likewise, it is shown the protective sheet (21) which protects the part through which the striker accessory (40.a) is inserted. This drawing represents the activation mechanism with fitting accessory 2 (40); here it is shown the inserted striker accessory (40.c), and the fitting accessory (40.b). When turning the striker accessory (40.c), the rupture of the water container (15) occurs, causing that both elements, calcium oxide (17) and calcium chloride (18), mix with water (19), producing the exothermic reaction.

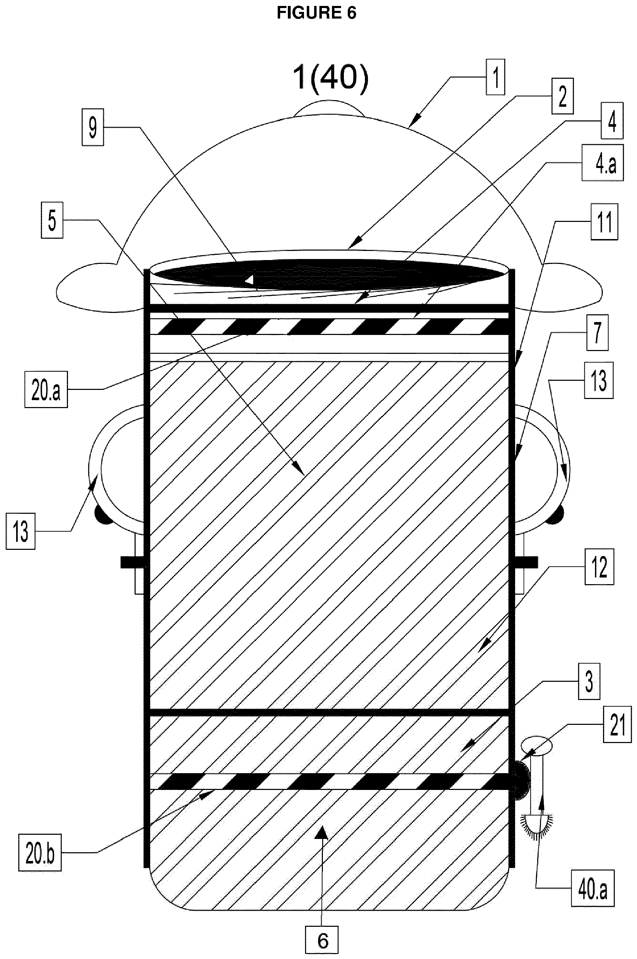

- Figure 6 shows a front view of the self-heating container, where it is shown: the cover (1), the threaded upper lid (2), the upper threaded contour (4), the contour of cover fitting (4.a), the upper compartment (5), the entire body of the container (7), likewise, the upper sheet (9) that is placed in the upper mouth of the container where the product content is filled in. It is also shown the outer sheet (11), the insulating sheet (12) (which isolates heat), the adaptable handles (13), the upper security seal (20.a), also shown the lower security seal (20.b), the protective sheet (21) which protects the part through which the fitting accessory (40.b) through which the striker fitting is inserted (40.a). This drawing shows the Activation mechanism with fitting accessory 1 (40), it shows the inserted striker fitting (40.a). When introducing the striker accessory (40.a), the rupture of the water container (15) occurs, causing that both elements, calcium oxide (17) or calcium chloride (18), mix with water (19), producing the exothermic reaction.

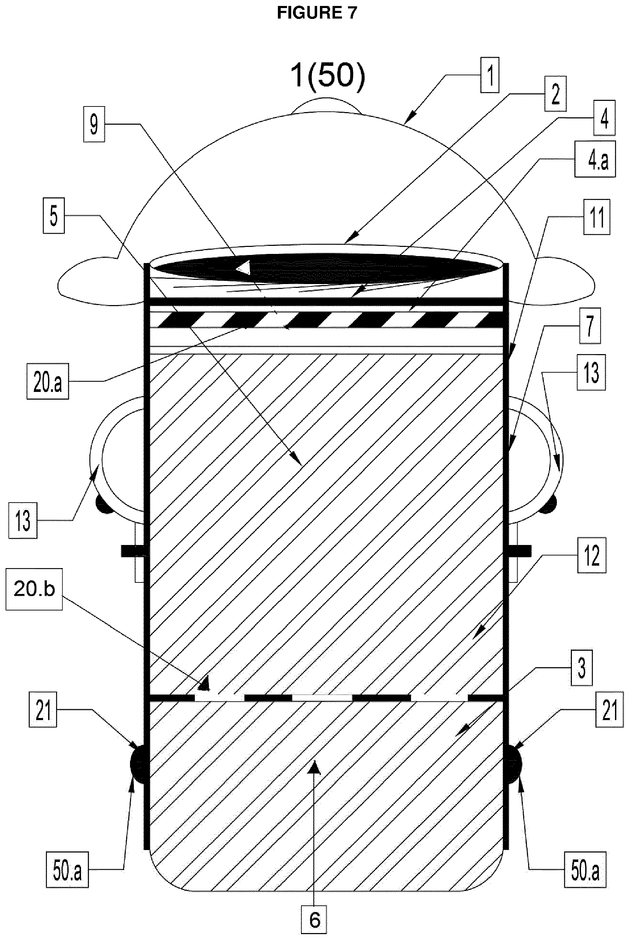

- Figure 7 shows a front view of the self-heating container, where it is shown: the cover (1), the threaded upper lid (2), the upper threaded contour (4), the contour of cover fitting (4.a), the upper compartment (5), the entire body of the container (7); likewise, the upper sheet (9) that is placed in the upper mouth of the container where the product content is filled in. It is also shown the outer sheet (11), the insulating sheet (12) (which isolates heat), the adaptable handles (13), the upper security seal (20.a), the protective sheet (21) which protects the front end of the striker fitting when the activation buttons are pressed in (50.a). This drawing shows the Activation mechanism with buttons 1 (50), it shows the side buttons (50.a). When pressing such buttons (50.a), on both sides, the rupture of the water container (15) occurs, causing that both elements, calcium oxide (17) or calcium chloride (18), mix with water (19), producing the exothermic reaction.

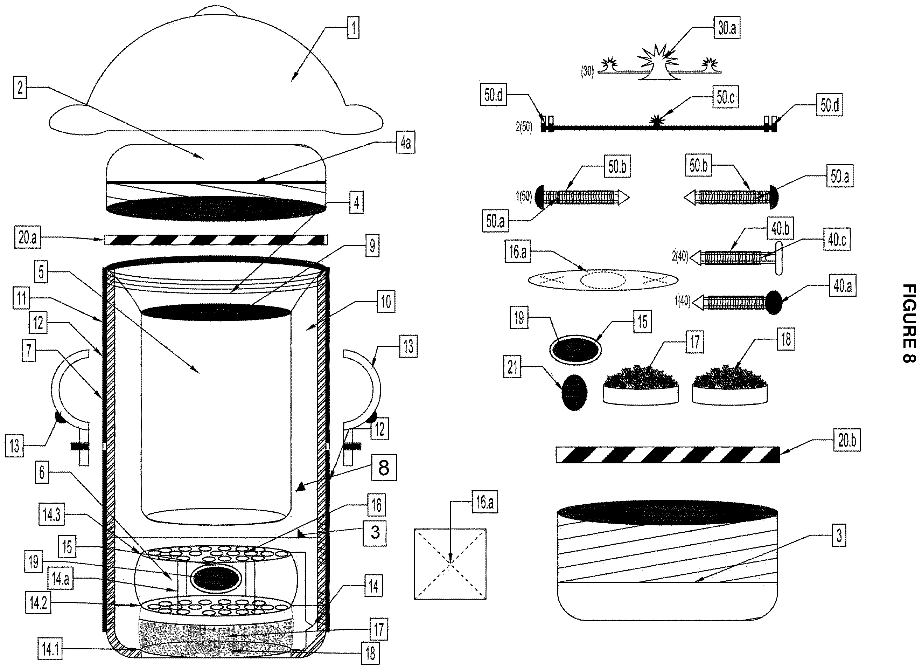

- Figure 8 shows an exploded view in perspective of the self-heating container where the different components are identified, such as the cover (1), the threaded upper lid (2), the upper threaded contour (4), the contour of the cover fitting (4.a), the upper compartment (5), the lower threaded lid (3), the entire body of the container (7), the free space (8) between both compartments (5; 6), the upper sheet (9), the inner sheet (10), the outer sheet (11), and the insulating sheet (12), the adaptable handles (13), the integral mechanism of chemical compounds (14), the three levels of the integral mechanism (14.1; 14.2; 14.3), the fitting of the water container (14.a), the water container (15), the sheet (16) that covers each level (14.1; 14.2; 14.3) of the integral mechanism of chemical compounds (14), the chopped sheet (16.a), calcium oxide (17), calcium chloride (18), water (19), the upper security seal (20.a), lower security seal (20.b), the protective sheet (21), the rotating activation mechanism (30), the striking activation mechanism with two arms (30.a), the activation mechanism with fitting accessory (40), the inserted striker fitting (40.a), the fitting accessory (40.b), the rotating striking accessory (40.c), the button activation mechanism (50), the striker fitting with side buttons (50.a), the fitting accessory of side strikers (50.b), the striking accessory with linked buttons (50.c), and the buttons with up and down mechanism (50.d).

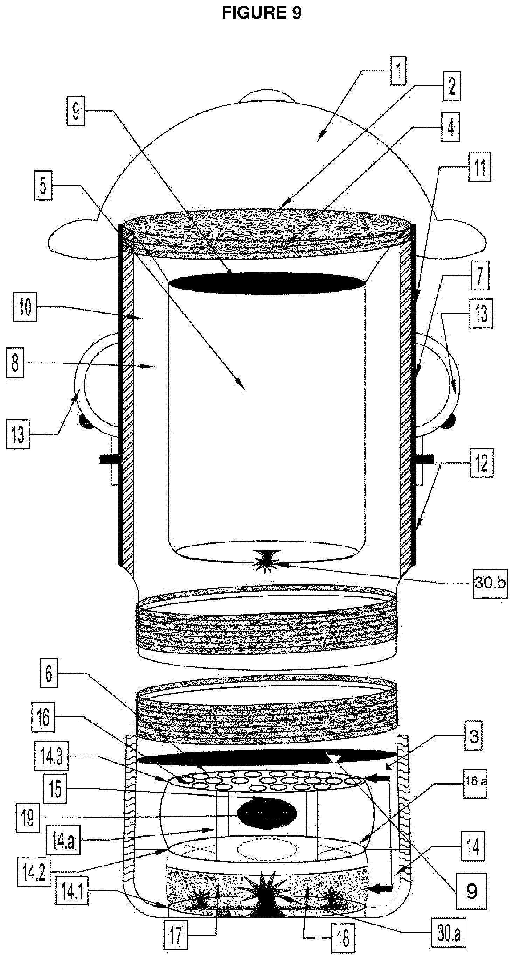

- Figure 9 shows a front view of the self-heating container, focused on the "Rotating Activation mechanism (30)", where it is shown: the cover (1), the threaded upper lid (2), the upper threaded contour (4), the upper compartment (5), the lower threaded lid (3), the entire body of the container (7), the free space (8) between both compartments (5; 6), also the upper sheet (9) that is placed in the upper mouth of the container where the product content is filled and is also placed in the mouth of the lower threaded lid (3). It is also shown the inner sheet (10) that lines up the inside of the container, the outer sheet (11), the insulating sheet (12) (which isolates heat), the adaptable handles (13), the striker fitting (30.b), the integral mechanism of chemical compounds (14) (which is a 3-level mechanism (14.1; 14.2; 14.3), each level holding a chemical element that can be, calcium oxide (17), or calcium chloride (18), and water (19); the first level (14.1) holds calcium oxide (17) or calcium chloride (18), and the second level (14.2), holds water (19), the third level (14.3), has holes and has free space, so that heat flows upwards with no problems. It is also shown the fitting of the water container (14.a), the water container (15), the sheet (16) that covers each level (14.1; 14.2; 14.3) of the integral mechanism of chemical compounds (14). It is also shown the breakable or chopped sheet (16.a) of the second level (14.2). All this Integral Accessory system is located inside the lower threaded lid (3). This drawing shows the "Reusable Self-Heating Container System" with the "Rotating Activation Mechanism" (30), it is shown the striking accessory with two arms (30.a), which when rotated rises up and causes the breaking of the water container (15), making both elements calcium oxide (17) and calcium chloride (18) mix with water (19), producing the exothermic reaction.

In all the figures, numerical references appear that identify the following elements:
(1) Cover
(2) Upper threaded lid
(3) Lower threaded lid
(4) Threaded upper contour
(4.a) contour of the cover fitting
(5) Upper compartment or part
(6) Lower compartment or part
(7) Whole container body
(8) Free space
(9) Upper sheet
(10) Inner sheet
(11) Outer sheet
(12) Insulating sheet
(13) Adaptable handle
(14) Integral mechanism of chemical compounds.
(14.1) first level of the integral mechanism
(14.2) second level of the integral mechanism
(14.3) third level of the integral mechanism
(14.a) fitting of the water container
(15) water container
(16) Sheet of each level
(16. a) Chopped sheet
(17) calcium oxide
(18) calcium chloride
(19) water
(20.a) upper security seal
(20.b) lower security seal
(21) Protective sheet
(30) Rotating activation mechanism
(30.a) striking accessory with two arms
(30.b) striking accessory with one arm
(40) activation mechanism with fitting accessories
(40.a) inserted striking accessory
(40.b) fitting accessory
(40.c) rotating striking accessory
(50) button activation mechanism
(50.a) striking accessory with side buttons
(50.b) fitting accessory of side strikers
(50.c) fitting accessory with linked buttons
(50.d) button with up and down mechanism

### PREFERRED EMBODIMENT OF THE INVENTION

As mentioned above, the present invention is constituted by a package comprising an upper compartment (5) and a lower compartment (6); the height of the container is preferably 10-15cm of height; the material is aluminum, stainless steel, tinplate, among others; thin thickness. The measures and designs of the container are made according to the type of product to be heated and also according to the quantity of the product.

The upper compartment (5) measures 10-12cm, here is held the contents of the product, which can be chocolate, coffee, and other products and food. Once the content of the product is filled, the upper mouth of the contour of the container (4) is sealed with a thin aluminum sheet (9), after which the threaded upper lid (2) is placed, this lid is made of polyethylene material or others which fits into the upper threaded contour (4), such upper threaded contour (4) is made of polyethylene covered with polystyrene or polyurethane, etc. This is so that the heat felt in the upper contour (4) is minimal and can be taken to the mouth with no problems.

Likewise, the upper threaded lid (2) has a fitting contour of the cover (4.a), where the cover (1) fits perfectly, this cover (1) holds certain special foods such as baby formula, ingredients of the soup, and so on, which works as follows: the baby formula (milk powder) is filled in the cover (1) and immediately protected by sealing it with an aluminum foil (9), this is so that milk and other special foods do not lose their vitamins, proteins, etc. (its nutritional value). The cover material (1) is made of polyethylene or others and measures 4 to 5 cm. After all this, the upper security seal (20.a) is placed, which is made of adhesive material, polyethylene or paper or others.

The entire body of the container (7) has a measurement of 10 to 15cm. In between the compartments (5; 6), there is a free space (8) of 1 to 2 mm, this measurement is according to the size and design of the container (7). Through this free space (8) the heat flows and surrounds the contour of the container, causing the entire content of the product to be heated evenly. The inside of the container is lined up with a thin sheet (10), made of polystyrene, aluminum, polyurethane or thin cardboard, etc. which prevents any type of leakage of the contents.

The outer part of the container is covered by an insulating sheet (12), made of extended polystyrene, polyurethane, and others, for insulating and blocking heat, so that when the container is touched only minimal heat is felt and is suitable for the user's touch. Next to it, is placed the second outer sheet (11) or the label, made of polyethylene, thin cardboard, or others.

Likewise, the container has two fasteners on both sides which are two adaptable and flexible handles (13) of polyethylene, or others, etc. These handles (13) are initially straight, and when pressing the handle fitting (13) they turn oval and this is how the handles are formed.

As for the lower threaded lid (6), activation mechanisms (30-40-50) are installed inside such lower threaded lid (3), and also there it is located the mechanism of the integral chemical compound accessory (14), which is of (3-3½cm.) of height, made of aluminum, etc. and it has three levels (14.1; 14.2; 14.3), each level is lined up by an aluminum sheet (16), the floor of each level has holes, in the second level (14.2) is the water accessory (14. a), covered by an aluminum foil (16.a) with chopped points, on the sides and at the bottom of the water accessory (14.a). The sheet (16.a) is there to protect the water container (15), in such a way that when it is triggered the striker breaks the chopped aluminum sheet (16.a) and subsequently breaks the water container (15).

Inside the water accessory (14.a), is located the water container (15), which is a container or a wrapper made of polyethylene-coated latex, aluminum-coated latex or aluminum-coated polyethylene, among others.

Also, there are chemical elements of compound 1 (calcium oxide (17) and water (19)), compound 2 made up of (calcium chloride (18) and water (19)). The amount of both substances depends on the amount of the contents of the product to be heated, for example, for a 250 ml drink the compound is 35 g of calcium oxide (17) and 17 ml of water (19). Both elements, calcium oxide (17) and water (19) are separated and at the moment of activation they mix and produce the exothermic reaction that gives off heat in the form of steam and begins to heat the contents of the product in a period of 1-5 minutes, this allows food to stay warm longer.

The lower threaded lid (3) works as the self-heating device and is a removable lid for the reusable system and a non-removable lid for the single-use system. Once all the elements (17; 18; 19) of the integral compound mechanism (14), and the strikers with their respective activation mechanisms are installed, the lid is screwed and sealed with the lower part of the upper compartment, being amalgamated with the container. Next, the lower security seal (20.b) is placed, which should preferably be thick and of cardboard covered with polyethylene, among others. Additionally, the protective sheet (21) should be made of polystyrene covered with foil aluminum, or the like.

There are three activation mechanisms of the self-heating device.

The 3 activation mechanisms are applicable for both the reusable self-heating container and for the single-use, non-reusable container.

In the case of the self-heating single-use container, the non-removable lower threaded lid (3) is attached and hermetically sealed to the container body (7) and therefore the lower threaded lid (3) cannot be removed, taken out or detached because said lower lid (3) is solidly attached to the body of the container (7). This is done for safety purposes and to avoid leakages, etc. Likewise, the activation mechanisms (30-40-50) and all the elements that produce the exothermic reaction are already installed inside the lower threaded lid (3): calcium oxide (17), calcium chloride (18), and water (19) which are housed inside the integral accessory (14) which itself is also located inside the lower threaded lid (3).

For the reusable self-heating container system, there is an easily removable lower threaded lid (3). It is only needed to place and rotate the lower threaded lid (3), which is easy to put in and take out. Inside the lower threaded lid (3) the "activation mechanisms (30-40-50)" are already installed, and all the chemical elements that produce the exothermic reaction: calcium oxide (17), calcium chloride (18), and water (19), are housed inside the integral accessory (14) which itself is located inside the lower threaded lid (3). When taking the last turn on such lower threaded lid, it is closed completely and compacts the contents further, sealing fully the container and preventing all leaks. All this is done for safety, since in the lower part is where all the chemical compounds and formula of the self-heating device are concentrated.

The first is a rotating activation mechanism (30). It works as follows: first the security seal is removed from the lower part (20.b), then put a hand on the lower threaded lid (3) and rotate and the device is activated. On the lower part of the container bottom the lower treaded lid (3) is placed. In the center of the lower threaded lid (3), there is a striker accessory with two arms (30.a), which has on both sides pointed striking accessories making a total of three pointed accessories on top of the same base. Also, on the base of the inner receptacle is placed a one-arm striking accessory (30.b). The lower threaded lid (3), when turning, rises and causes the water container (15) to break, and the device is activated, starting to heat the product.

The second activation mechanism is with activation button 1 (50). It works as follows: first the lower security seal (20.b) is removed, then the two striking accessories with side buttons (50.a) are pressed, each button internally has a striking accessory (50.a), which when the buttons are pressed on, cause the water container (15) to break and the self-heating device to activate, starting to heat the product.

There is also the Activation Mechanism with activation button 2 (50). It works as follows: first, the lower security seal (20.b) is removed, and at the same time the two buttons (50.d) are pressed upwards; such buttons (50.d) have a striker accessory with linked buttons (50.c), which is the intersection and by which the buttons (50.d) are coupled and held at the same base. These buttons (50.d) work together either when pressed up or down. Pressing both buttons (50.d) upwards causes the striker accessory (50.c) to rise and cause the water container (15) to rupture and the self-heating device to activate, starting to heat the product.

The third mechanism is with fitting accessory 1 (40); which works as follows: the lower security seal (20.b) is removed, then the striker accessory (40.a) is inserted in the lower side of the container (7), being perfectly fitted in the fitting accessory (40.b). The inserted striker accessory (40.a), has an irreversible threaded design not to be removed nor taken out again. This inserted striker accessory (40.a) has an elongated, pointed shape and is made of polyethylene or others, the accessory (40.a) is glued on the same lower side of the container (7). When introducing the striker accessory (40.a), the rupture of the water container (15) is caused and the device is activated, starting to heat the product.

There is also the Mechanism with fitting accessory 2 (40); which works as follows: the lower security seal (20.b) is removed, and the rotating striker accessory (40.c) is rotated and the accessory fits perfectly into the fitting accessory (40.b) of the container (7). This rotating striker accessory (40.c) has a non-removable threaded shape and is irreversible to be removed or to be taken out again, it is elongated, pointed, flexible, and is made of polyethylene or others.

By fitting the rotating striker accessory (40.c), the rupture of the water container (15) is produced, and the device is activated starting to heat the product.

Moreover, the three activation mechanisms are applicable to both "single-use self-heating container systems" and "reusable self-heating container systems".

Therefore, the activation mechanisms and the other components of the lower threaded lid can be used in the two self-heating container systems: "a single-use system" and "a reusable system."

The Reusable Self-Heating Container System consists of a container with two threaded lids, (one upper and one lower), the product contents are placed in the upper compartment and the self-heating device is placed in the lower threaded lid, which is a lower threaded lid that houses inside all the chemical elements that heat the product. To reuse the container it only needs to be washed and to reheat any product, only place a new elf-heating device on the lower threaded lid (the device is the same as the lower threaded lid).

The Self-Heating Single-Use Container System; consists of a container with one upper threaded lid (removable) and a lower lid (non-removable), the lower lid is attached and hermetically sealed to the body of the container, for safety purposes and to avoid leakages, etc. since these containers are for single use and for ready-made foods among others. The content of the product is placed in the upper compartment and the self-heating device is placed in the lower threaded lid, which is a non-removable lower threaded lid attached and sealed to the body of the container or to the upper compartment. The lower lid houses inside it all the chemical elements that heat the product. In order to reuse the container, only needs to be washed and to reheat any product, only place in the lower compartment a new self-heating device that is the same as the lower threaded lid.

Once the nature of the invention has been sufficiently described, as well as the preferred embodiment, it is stated for the appropriate purposes that the materials, shape, size and arrangement of the described elements may be modified, provided that this does not entail an alteration of the essential features of the invention that are claimed below.

## Claims

1. A self-heating container of products based on an exothermic reaction wherein the self-heating container comprises:
an upper compartment (5); a receptacle inside the upper compartment which is filled with the contents of the product and has a hermetic coupling between the upper part of the upper compartment and the upper part of the inside receptacle; an internal free space (8) between the receptacle and the upper compartment for heat circulation;
a lower threaded lid (3) connected through a threaded coupling with the upper compartment (5) to allow its interchangeability; said lower threaded lid (3) is a continuous extension and fits into the contour of the lower part of the upper compartment; the lower threaded lid (3) contains a first chemical compound of calcium oxide or calcium chloride separated from a second chemical compound of water through at least one breakable sheet and/or a breakable water container (15); a rotating activation mechanism (30), a button activation mechanism (50) or an activation mechanism with a fitting accessory (40) located on the outside of the lower threaded lid which causes the rupture of the breakable sheet or the breakable water container (15) through at least one striker located inside the lower threaded lid and allows the mixing of the calcium oxide or calcium chloride compound with water, producing the exothermic reaction.

2. The self-heating container of products based on an exothermic reaction, according to claim 1, where in the upper compartment comprises a threaded upper contour (4) and an upper threaded lid (2) that fits perfectly into the upper threaded contour of the upper compartment.

3. The self-heating container of products based on an exothermic reaction, according to Claims 1 and 2, wherein the upper compartment comprises at least one flexible handle (13) on the outer side part of the container, which is initially foldable to the contour of the container and then can be unfolded to a position perpendicular to the contour of the container.

4. The self-heating container of products based on an exothermic reaction, according to Claims 1 to 3, wherein the self-heating container has an upper sheet (9) placed on the upper contour of the upper compartment.

5. The self-heating container of products based on an exothermic reaction, according to Claims 1 to 4, wherein the self-heating container has a heat insulating layer made of expanded polystyrene that covers all the outside of the container.

6. The self-heating container of products based on an exothermic reaction, according to Claim 2, wherein the self-heating container has a security seal coupled at the junction between the upper threaded contour (4) and the upper threaded lid (2).

7. The self-heating container of products based on an exothermic reaction, according to Claims 1 to 6, wherein the rotating activation mechanism (30) comprises a base that supports three striking accessories (30.a), that when it is rotated, the base with the striking accessories rise up and break the water container (15), activating the device, and starting to heat the product.

8. The self-heating container of products based on an exothermic reaction, according to Claims 1 to 6, wherein the button activation mechanism (50) comprises a pair of joint activation buttons that are placed on both external sides of the lower threaded lid; said buttons are connected to a base that has at least one striker inside the lower threaded lid aligned with the water container, that when pressing the buttons together, the rupture of the water container is generated.

9. The self-heating container of products based on an exothermic reaction, according to Claims 1 to 6, wherein the activation mechanism with a fitting accessory (40) comprises a striking accessory (40.a) having an elongated shape, a threaded body and a pointed end, such accessory is adhered removable to the side of the lower threaded lid; there is an internal conduit coupled from an external side of the lower threaded lid, and once the striking accessory (40.a) is introduced in said internal conduit, a rupture of the water container is generated, the striking accessory is irreversible and cannot be removed or taken out again.
